# EUROPÄISCHE PATENTANMELDUNG

(11) **EP 2 110 310 A2**
(43) Veröffentlichungstag der Anmeldung: **21.10.2009**
(21) Anmeldenummer: 09010067.8
(22) Anmeldetag: 02.03.2007
(51) Int. Cl.: B63H 21/12, B63H 23/18, B63J 3/02, B63J 3/04, H02J 9/06

(54) **Verfahren zum Betrieb eines Schiffsantriebssystems mit Abwärmerückgewinnung sowie Schiffsantriebssystem mit Abwärmerückgewinnung**

(30) Priorität: 02.05.2006 DE 102006020144
(62) Teilanmeldung aus: 07712423.8
(71) Anmelder: SIEMENS AKTIENGESELLSCHAFT, 80333 München (DE)
(72) Erfinder: Fröhlich, Hans-Joachim, 22117 Hamburg (DE); Tigges, Kay, 21698 Harsefeld (DE)

(57) **Zusammenfassung**

Bei einem Schiffsantriebssystem (1) mit einer Hauptmaschine (2), die eine Wellenanlage (3) antreibt, die mit einem Schiffspropeller (4) gekoppelt ist, einem Abwärmerückgewinnungssystem (20), das aus Abwärme der Hauptmaschine elektrischer Energie erzeugt und in ein elektrisches Schiffsnetz (5) einspeist, und einem über einen Umrichter (12) mit dem elektrischen Netz (5) verbundenen Wellengenerator/-motor (11), der mit der Wellenanlage (3) gekoppelt ist und der im Motorbetrieb elektrische Energie aus dem Schiffsnetz (5) in mechanische Energie zum Antrieb der Wellenanlage (3) und im Generatorbetrieb mechanische Energie der Wellenanlage (3) in elektrische Energie für das Schiffsnetz (5) umwandelt, besteht das Problem, dass ein unvorhergesehener Ausfall der Energieerzeugung durch das Abwärmerückgewinnungssystem (20) zu einer Netzstörung bis hin zu einem Blackout des Schiffes führen kann.

Dies wird erfindungsgemäß dadurch vermieden, dass bei Motorbetrieb des Wellengenerators/-motors (11) und einem Ausfall der Energieerzeugung durch das Abwärmerückgewinnungssystem (20) der Wellengenerator/-motor (11) von Motorbetrieb in Generatorbetrieb umgeschaltet wird, wobei während der Umschaltzeit eine Energiequelle (17,52) elektrische Energie in das Schiffsnetz (5) einspeist, derart, dass die Spannung und Frequenz des Schiffsnetzes (5) einen jeweils vorgegebenen Grenzwert nicht unterschreiten.

## Beschreibung

Die Erfindung betrifft ein Verfahren zum Betrieb eines Schiffsantriebssystems mit Abwärmerückgewinnung gemäß Oberbegriff des Patentanspruchs 1 sowie ein Schiffsantriebssystem mit Abwärmerückgewinnung gemäß Oberbegriff des Patentanspruchs 8; ein derartiges Schiffsantriebssystem ist z.B. aus der Veröffentlichung "Less emissions through waste heat recovery", Wärtsilä Corporation, April 2004, präsentiert auf der der Green Ship Conference, London, 28/29 April 2004, bekannt.

Das Antriebssystem für große Cargoschiffe, beispielsweise Containerschiffe, umfasst üblicherweise eine Hauptmaschine in Form eines langsam laufenden Zweitakt-Dieselmotor zur Erzeugung von mechanischer Energie zum Antrieb einer Wellenanlage, z.B. einer Propellerwelle, die mit einem Schiffspropeller gekoppelt ist. Die Antriebsleistung derartiger Motoren beginnt bei ca. 10 MW und endet zur Zeit bei über 70 MW.

Elektrische Verbraucher an Bord des Schiffes werden üblicherweise aus einem elektrischen Schiffsnetz mit elektrischer Energie versorgt, die wiederum von Stromgeneratoren erzeugt wird, die von schneller als die Hauptmaschine laufenden Hilfsmaschinen, üblicherweise schnell laufenden Viertakt-Dieselmotoren, angetrieben werden.

Steigende Brennstoffpreise, der Wunsch nach geringeren Emissionen und nach geringeren Betriebskosten haben in den letzten Jahren das Interesse an der Nutzung der Abwärme der Hauptmaschine zur Energierückgewinnung verstärkt. Nutzbare Abwärme findet sich insbesondere in den Abgasen und Kühlmitteln der Hauptmaschine.

Bei einem aus der vorgenannten Veröffentlichung bekannten Schiffsantriebssystem erzeugt ein Abwärmerückgewinnungssystem aus Abwärme der Hauptmaschine elektrische Energie und speist diese in das elektrische Schiffsnetz ein. Ein über einen Umrichter mit dem elektrischen Netz verbundener Wellengenerator/-motor ist mit der Wellenanlage gekoppelt und wandelt im Motorbetrieb elektrische Energie aus dem Schiffsnetz in mechanische Energie zum Antrieb der Wellenanlage und im Generatorbetrieb mechanische Energie der Wellenanlage in zusätzliche elektrische Energie für das Schiffsnetz um.

Sobald das Abwärmerückgewinnungssystem Energie in das Schiffsnetz einspeist, werden durch ein Power Management System die Hilfsmaschinen zum Antrieb der Stromgeneratoren entlastet oder im besten Fall sogar abgeschaltet. Zusätzlich kann durch den Wellengenerator/-motor im Generatorbetrieb elektrische Energie in das Schiffsnetz eingespeist und dadurch der Leistungsbedarf aus den Hilfsmaschinen noch weiter reduziert werden. Durch diese Maßnahmen können die Brennstoff- und Betriebskosten sowie Emissionen der Hilfsmaschinen deutlich verringert werden.

Vorrangiges Ziel ist es, möglichst die gesamte vom Abwärmerückgewinnungssystem zur Verfügung stehende elektrische Energie in das Schiffsnetz einzuspeisen. Erzeugt das Abwärmerückgewinnungssystem sogar mehr Energie, als für die elektrischen Schiffsverbraucher benötigt wird, so kann mit diesem Energieüberschuss der Wellengenerator/-motor im Motorbetrieb betrieben und somit eine zusätzliche Antriebskraft auf die Propellerwelle abgegeben werden. In diesem Betriebsfall speist somit nur das Abwärmerückgewinnungssystem elektrische Energie in das Schiffsnetz ein, während die Hilfsmaschinen dagegen abgeschaltet sind.

Bei einem unvorhergesehenen Ausfall der Energieerzeugung durch das Abwärmerückgewinnungssystem dauert es üblicherweise einige Zeit, bis durch das übergeordnetes Power Management System die Hilfsmaschinen gestartet und die davon angetriebenen Generatoren Strom für das Schiffsnetz erzeugen. Der Ausfall der Energieerzeugung durch das Abwärmerückgewinnungssystem kann somit zu Einbrüchen in der Netzspannung und Netzfrequenz und dadurch zu Sicherheitsabschaltungen der Schiffsverbraucher bis hin zu einem völligen Blackout des Schiffsnetzes, d.h. einem Abschalten für den Betrieb des Schiffes kritischer Verbraucher führen.

Es ist Aufgabe vorliegender Erfindung, ein Verfahren zum Betrieb eines Schiffsantriebssystem der eingangs genannten Art und ein Schiffsantriebssystem anzugeben, mit denen Netzstörungen, insbesondere ein Blackout des Schiffes, bei einem Ausfall der Energieerzeugung durch das Abwärmerückgewinnungssystem vermieden werden können.

Die Lösung der auf das Verfahren gerichteten Aufgabe gelingt durch ein Verfahren gemäß Patentanspruch 1; vorteilhafte Ausgestaltungen des Verfahrens sind Gegenstand der Unteransprüche 2 bis 7. Die Lösung der auf das Schiffsantriebssystem gerichteten Aufgabe gelingt durch ein Schiffsantriebssystem gemäß Patentanspruch 8; vorteilhafte Ausgestaltungen des Schiffsantriebssystems sind Gegenstand der Unteransprüche 9 bis 14.

Das erfindungsgemäße Verfahren sieht vor, dass bei Motorbetrieb des Wellengenerators/-motors und einem Ausfall der Energieerzeugung durch das Abwärmerückgewinnungssystem der Wellengenerator/-motor von Motorbetrieb in Generatorbetrieb umgeschaltet wird, wobei während der Umschaltzeit eine Energiequelle elektrische Energie in das Schiffsnetz einspeist, derart, dass Spannung und Frequenz des Schiffsnetzes einen jeweils vordefinierten Grenzwert nicht unterschreiten.

Durch eine geeignete Wahl der jeweiligen Grenzwerte für die Spannung und Frequenz des Schiffsnetzes können Netzstörungen vermieden werden. Insbesondere kann gezielt die Funktionsbereitschaft für den Schiffsbetrieb kritischer Verbraucher an Bord des Schiffes bei einem Ausfall der Energieerzeugung durch das Abwärmerückgewinnungssystem gewährleistet und somit ein Blackout des Schiffes vermieden werden.

Gemäß einer vorteilhaften Ausgestaltung des erfindungsgemäßen Verfahrens wird als Umrichter ein Gleichstrom-Zwischenkreis-Umrichter und als Energiequelle eine rotierende Blindleistungsmaschine für das Schiffsnetz verwendet. Die für die Blindleistungserzeugung im Fall eines derartigen Umrichters ohnehin notwendige Blindleistungsmaschine wird somit für die Stützung des Schiffsnetzes bei Ausfall der Energieerzeugung durch das Abwärmerückgewinnungssystem verwendet. Zusätzlicher Platzbedarf für eine weitere zusätzliche Energiequelle wird somit vermieden.

Gemäß einer alternativen Ausgestaltung des erfindungsgemäßen Verfahrens wird als Umrichter ein Gleichspannungs-Zwischenkreis-Umrichter und als Energiequelle ein Zwischenkreiskondensator des Gleichspannungszwischenkreises dieses Umrichters verwendet. Auch hier wird der für den Umrichterbetrieb, insbesondere auch für dessen Blindleistungsabgabe, ohnehin notwendige und somit bereits vorhandene Zwischenkreiskondensator für die Stützung des Schiffsnetzes bei Ausfall der Energieerzeugung durch das Abwärmerückgewinnungssystem verwendet. Zusätzlicher Platzbedarf für eine weitere zusätzliche Energiequelle wird somit vermieden.

Eine besonders schnelle Umschaltung des Wellengenerators/- motors von Motorbetrieb in Generatorbetrieb ist dadurch möglich, dass der Umrichter einen netzseitigen und einen motorseitigen Stromrichter mit jeweils steuerbaren Stromrichterventilen aufweist und die Umschaltung der Wellengenerator-/- motoreinrichtung von Motorbetrieb in Generatorbetrieb durch Änderung der Einschaltdauer der Stromrichterventile erfolgt.

Weiterhin kann eine besonders schnelle Umschaltung des Wellengenerators/-motors von Motorbetrieb in Generatorbetrieb erfolgen, wenn die Umschaltung von dem Abwärmerückgewinnungssystem unter Umgehung eines softwaregesteuerten Power Management Systems ausgelöst wird.

Die Dimensionierung der Energiequelle hinsichtlich der während der Umschaltung einzuspeisende Energie und somit deren Platzbedarf kann dadurch klein gehalten werden, dass bei dem Ausfall der Energieerzeugung durch das Abwärmerückgewinnungssystem an das Schiffsnetz angeschlossene, für den Schiffsbetrieb unkritische, elektrische Verbraucher abgeschaltet werden.

Ein erfindungsgemäßes Schiffsantriebssystems mit Abwärmerückgewinnung, insbesondere zur Durchführung des erfindungsgemäßen Verfahrens, umfasst
- ein Steuer- und Regelsystem zur Umschaltung des Wellengenerators/-motors bei einem Ausfall der Energieerzeugung durch das Abwärmerückgewinnungssystem von Motorbetrieb zu Generatorbetrieb und
- eine Energiequelle, durch die während der Umschaltung von Motorbetrieb in Generatorbetrieb elektrische Energie in das Schiffsnetz einspeisbar ist, wobei die Zeit für die Umschaltung von Motorbetrieb in Generatorbetrieb und die Dimensionierung der Energiequelle hinsichtlich der in der Zeit der Umschaltung in das Schiffsnetz einspeisbaren Energie derart aufeinander abgestimmt sind, dass aufgrund der während der Umschaltung in das Schiffsnetz eingespeisten Energie die Spannung und Frequenz des Schiffsnetzes einen jeweils vorgegebenen Wert nicht unterschreiten.

Die für das erfindungsgemäße Verfahren genannten Vorteile gelten entsprechend für das erfindungsgemäße Schiffsantriebssystems.
Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigt:
- FIG 1: ein Prinzipschaltbild eines Schiffsantriebssystem gemäß einer ersten vorteilhaften Ausgestaltung der Erfindung,
- FIG 2: ein Beispiel für den Aufbau des Steuer- und Regelsystems von FIG 1,
- FIG 3: ein Beispiel für eine Umschaltung des Wellengenerators/-motors von Motor- zu Generatorbetrieb und
- FIG 4: ein Prinzipschaltbild eines Schiffsantriebssystem gemäß einer zweiten vorteilhaften Ausgestaltung der Erfindung.

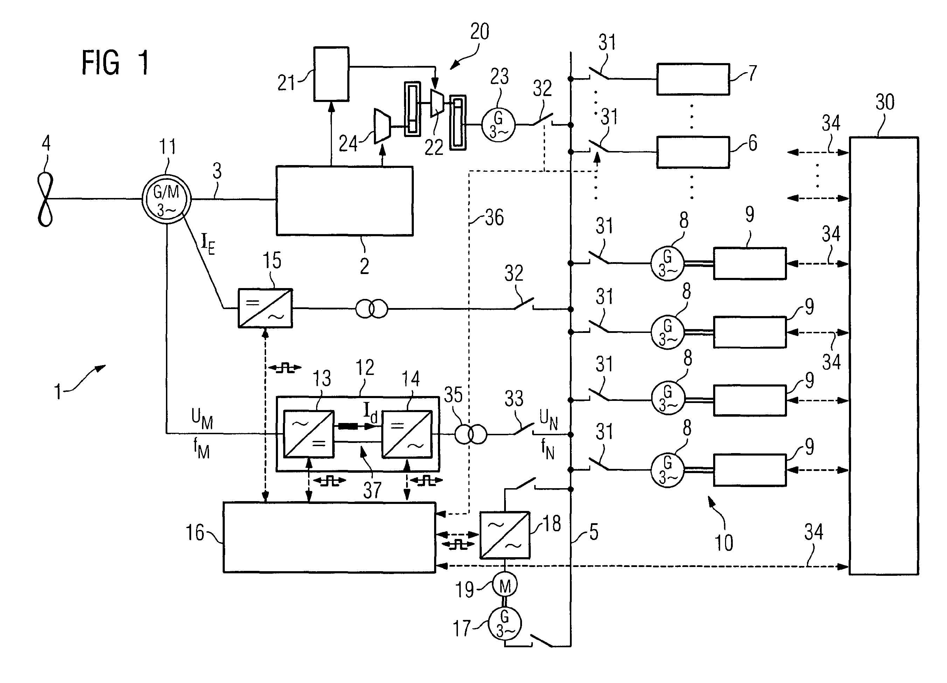

Ein in FIG 1 stark schematisiert gezeigtes Schiffsantriebssystem 1 mit Abwärmerückgewinnung für ein großes Containerschiff weist eine als langsam laufenden Zweitaktdieselmotor ausgebildete Hauptmaschine 2 auf, die über eine Propellerwelle 3 einen Schiffspropeller 4 zum Antrieb des Schiffes aufweist.

Ein elektrisches Schiffsnetz 5 dient zur Energieversorgung elektrischer Geräte und Systeme an Bord des Schiffes. Hierbei ist zu unterscheiden zwischen kritischen Verbrauchern, deren Abschaltung zu einem Blackout an Bord des Schiffes führt, und unkritischer Verbrauchern (z.B. Hotellast), die nicht zu einem Blackout führen. Aus Gründen der Übersichtlichkeit ist in FIG 1 jeweils nur ein einziger kritischer Verbraucher 6 und ein einziger unkritischer Verbraucher 7 dargestellt, in der Praxis werden jeweils eine größere Anzahl derartiger Verbraucher 6, 7 aus dem Schiffsnetz 5 mit Strom versorgt.

Zur Energieerzeugung für das Schiffsnetz 5 sind mehrere Generatoren 8 vorgesehen, die jeweils von einer schneller als die Hauptmaschine laufenden Hilfsmaschine 9 angetrieben werden. Bei den Hilfsmaschinen 9 handelt es sich üblicherweise um schnell laufende Viertakt-Dieselmotoren mit einer Leistung von beispielsweise bis zu 5 MW. Üblicherweise sind jeweils ein Generator 8 und ein Dieselmotor 9 zu einem Dieselgeneratoraggregat 10 zusammengefasst.

Ein Wellengenerator/-motor 11 ist mechanisch mit der Propellerwelle 3 gekoppelt und elektrisch über einen Umrichter 12 und einen Transformator 35 mit dem Schiffsnetz 5 verbunden. Der Umrichter 12 ist als Gleichstrom-Zwischenkreisumrichter ausgebildet und besteht aus einem motorseitigen Stromrichter 13 und einem netzseitigen Stromrichter 14.

Der Wellenmotor/-generator 11 ist als langsam laufende Synchronmaschine ausgebildet und wirkt vorzugsweise direkt ohne zwischengeschaltetes Getriebe auf die Propellerwelle. Der Wellenmotor/-generator 11 kann aber auch über ein Getriebe an der Propellerwelle 3 angekuppelt oder mit der Kurbelwelle der Hauptmaschine 2 gekuppelt sein, und zwar an dem Ende, das von der Propellerwelle 3 abliegt.

Der Erregerstrom I_{E} für den Wellengenerator/-motor 11 wird ebenfalls aus dem Schiffsnetz 5 bezogen und über einen Erregerstromrichter 15 gesteuert und geregelt.

Durch Steuerung und Regelung des elektrischen Energieflusses durch den Umrichter 12 und des Erregerstromes I_{E} kann der Wellengenerator/-motor 11 entweder als Motor oder als Generator betrieben werden. Im Motorbetrieb wird dann elektrische Energie aus dem Schiffsnetz 5 in mechanische Energie zum Antrieb des Schiffspropellers 4 umgewandelt. Leistungsreserven im Schiffsnetz 5 können somit zur Vergrößerung der Antriebsleistung des Schiffes verwendet werden, wodurch entweder die Schiffsgeschwindigkeit erhöht oder bei gleich bleibender Schiffsgeschwindigkeit die Hauptmaschine 2 entlastet werden kann. Im Generatorbetrieb wird mechanische Energie der Propellerwelle 3 in elektrische Energie für das Schiffsnetz 5 umgewandelt. Hierdurch können Leistungsreserven der Hauptmaschine 2 zur Erzeugung von Energie für das Schiffsnetz 5 verwendet werden. Bevorzugt beträgt die Nennleistung des Wellenmotors/-generators 11 hierzu wenigstens 5 % der Nennleistung der Hauptmaschine 2.

Die Steuerung und Regelung des Wellengenerators/-motors über den Umrichter 12 und den Erregerstromrichter 15 erfolgt durch ein gemeinsames, vorzugsweise in Digitaltechnik ausgeführtes, Steuer- und Regelsystem 16. Der Stromrichter 13, der Stromrichter 14 und der Erregerstromrichter 15 sind hierbei durch das Steuer- und Regelsystem 16 unabhängig voneinander steuerbar und regelbar.

Hierfür erfasst das Steuer- und Regelsystem 16 über nicht näher dargestellte Messeinrichtungen die Drehzahl des Wellengenerators/-motors, die Motorspannung U_{M}, Motorfrequenz f_{M}, Zwischenkreisstrom I_{d}, Netzspannung U_{N} und Netzfrequenz f_{N}.

Da ein Gleichstrom-Zwischenkreis-Umrichter nur Wirkleistung in das Schiffsnetz 5 einspeisen kann, wird der Blindleistungsbedarf des Schiffsnetzes 5 von einer als Synchrongenerator ausgebildeten Blindleistungsmaschine 17 bereitgestellt. Die Blindleistungsmaschine 17 arbeitet im Normalbetrieb nur als Phasenschieber und speist keine Wirkleistung in das Netz 5 ein. Ein Anfahrumrichter 18 und ein Anfahrmotor 19 dienen zum Start der Blindleistungsmaschine 17. Die Steuerung des Anfahrumrichters 18 erfolgt ebenfalls durch das Steuer- und Regelsystem 16.

Zusätzlich wandelt ein Abwärmerückgewinnungssystem 20 Wärme der Hauptmaschine 2 in elektrische Energie für das Schiffsnetz 5 um. Hierzu wird Wärme aus den Abgasen der Hauptmaschine 2 über einen Wärmetauscher 21 an einen nicht näher dargestellten Dampfkreislauf übertragen, in den eine Dampfturbine 22 geschaltet ist, die mit einem Turbogenerator 23 gekoppelt ist. Ein Teil der Abgase wird vor der Zufuhr zu dem Wärmetauscher 21 zudem einer Leistungsturbine 24 zugeführt, die ebenfalls mit dem Turbogenerator 23 gekoppelt ist. Die von dem Turbogenerator 23 erzeugte elektrische Energie wird in das Schiffsnetz 5 eingespeist.

Ein softwaregesteuertes Power Management System 30 sorgt für die bedarfsgerechte Bereitstellung der elektrischen Energie für die verschiedenen Verbaucher und schaltet je nach Anforderung und zur Verfügung stehender Leistung über Schalter 31, 32, 33 einzelne Verbraucher 6, 7, Dieselgeneratorsätze 10, den Turbogenerator 23 bzw. den Wellengenerator/-motor 11 dem Schiffsnetz 5 zu oder ab. Das Power Management System 30 ist hierzu über Steuerleitungen 34 oder andere Kommunikationsverbindungen mit den Schaltern 31, 32, 33, den Dieselgeneratoraggregaten 10, dem Steuer- und Regelsystem 16 sowie einem nicht näher dargestellten Steuer- und Regelsystem des Abwärmerückgewinnungssystems 20 verbunden.

Vorrangiges Ziel beim Betrieb des Schiffsantriebssystems 1 ist es, die gesamte vom Abwärmerückgewinnungssystem 20 zur Verfügung stehende elektrische Energie in das Schiffsnetz 5 einzuspeisen. Sobald der Turbogenerator 23 Energie in das Schiffsnetz einspeist, werden durch das Power Management System die Dieselgeneratorsätze 10 entlastet und, falls möglich, sogar abgeschaltet. Durch diese Maßnahmen können die Brennstoff- und Betriebskosten sowie die Emissionen der Dieselgeneratorsätze 10 deutlich verringert werden.

Erzeugt das Abwärmerückgewinnungssystem 20 sogar mehr Energie, als für die elektrischen Schiffsverbraucher 6, 7 benötigt wird, so wird mit diesem Energieüberschuss der Wellengenerator-/motor 11 im Motorbetrieb betrieben und somit eine zusätzliche Antriebskraft auf die Propellerwelle 3 gegeben. In diesem Betriebsfall speist somit nur das Abwärmerückgewinnungssystem 20 elektrische Energie in das Schiffsnetz ein; die Dieselgeneratorsätze 10 sind dagegen abgeschaltet.

Ein ungeplanter Ausfall der Energieerzeugung durch das Abwärmerückgewinnungssystem 20, z.B. im Fall einer Störung, würde somit jedoch zu einem Einbruch der Spannung und Frequenz des Schiffsnetzes 5 mit der Folge einer Sicherheitsabschaltung der kritischen und unkritischen Verbraucher 6, 7 und somit zu einem Blackout des Schiffes führen, da es einige Sekunden dauert, bis die Dieselgeneratorsätze 10 gestartet und zur Energieversorgung für das Schiffsnetz 5 zur Verfügung stehen.

Um dies zu vermeiden, wird der Wellengenerator/-motor innerhalb von weniger als 1 Sekunde nach Störungssignalisierung von Motorbetrieb in Generatorbetrieb umgeschaltet. Während der Umschaltzeit wird der Energiebedarf des Netzes 5 aus der kinetischen Rotationsenergie der Blindleistungsmaschine 18 gedeckt. Diese übernimmt kurzzeitig die Energieversorgung für die kritischen Verbraucher und speist hierfür Energie in das Schiffsnetz 5 ein, und zwar derart, dass Spannung und Frequenz des Schiffsnetzes 5 einen jeweils vorgegebenen Grenzwert nicht unterschreiten. Die Grenzwerte sind hierbei so gewählt, dass eine Sicherheitsabschaltung der kritischen Schiffsverbraucher 6, die zu einem Blackout des Schiffes führen könnte, vermieden wird. Die Umschaltzeit und die Energieabgabefähigkeit der Blindleistungsmaschine während der Umschaltzeit sind hierfür aufeinander abgestimmt. Bei einer Umschaltzeit von weniger als 1 Sekunde reicht darüber hinaus die Energiespeicherungs- und -abgabefähigkeit der bisher üblicherweise verwendeten Blindleistungsmaschinen mit einer Leistung von 4 - 7 MVA, aus, so dass eine gezielte Überdimensionierung für die Zwecke der Energieeinspeisung während der Umschaltzeit nicht notwendig ist.

Wenn der Turbogenerator 23 den Blindleistungsbedarf des Schiffsnetzes 5 und der verschiedene Stromrichter decken könnte, wäre ein Betrieb der Blindleistungsmaschine 17 nicht notwendig und sie könnte abgeschaltet werden. Allerdings stände dann auch deren kinetische Rotationsenergie für die Stützung des Schiffsnetzes 5 bei einem Ausfall des Turbogenerators 23 nicht zur Verfügung. Die Blindleistungsmaschine 17 wird somit auch bei Energieerzeugung durch den Turbogenerator 23 weiter betrieben.

Eine kurze Umschaltzeit ist zum einen dadurch erzielbar, dass das Abwärmerückgewinnungssystem 20 dem Steuer- und Regelsystem 16 die Störung über eine direkte Leitungsverbindung 36, d.h. unter Umgehung des softwaregesteuerten Power Management Systems 30, signalisiert. Verzögerungen in der Signalübertragung durch die Software des Power Management Systems können hierdurch vermieden werden.

Das Steuer- und Regelsystem 16 weist hierzu einen Signaleingang auf, der über die Leitungsverbindung 36, d.h. durch eine "harte" Verdrahtung, direkt mit einem Signalgeber des Abwärmerückgewinnungssystems 20 für eine Störauslösung verbunden ist. Im Ausführungsbeispiel ist der Signalgeber ein nicht näher dargestellter potenzialfreier Hilfskontakt des Schalters 32, der bei einer Störung geöffnet wird, um den Turbogenerators 23 vom Netz 5 zu trennen.

Weiterhin ist eine derart kurze Umschaltzeit dadurch erzielbar, dass die Ansteuerung der Stromrichter 13, 14 und des Erregerstromrichters 15 bei der Umschaltung von Motorbetrieb zu Generatorbetrieb ohne Impulsabschaltungen, d.h. alleine durch Veränderung der Einschaltzeitpunkte und somit Einschaltdauern der Stromrichterventile erfolgt. Bei Verwendung von Thyristoren als Stromrichterventilen werden hierbei üblicherweise nur die Einschaltzeitpunkte über den sogenannten Steuerwinkel α gesteuert. Bei Verwendung von GTOs, IGBTs oder IGCTs können sowohl die Einschalt- als auch die Ausschaltzeitpunkte gesteuert werden.

Eine derartige Ansteuerung der Stromrichterventile ohne Impulsabschaltung ist dadurch möglich, dass das Steuer- und Regelsystem 16 den Wellengenerator/-motor über den Umrichter 12 und Stromrichter 15 im Motorbetrieb und Generatorbetrieb mit der gleichen Regelungsart regelt. Impulsabschaltungen beim Übergang vom Motorbetrieb zu Generatorbetrieb und die damit einhergehenden Verzögerungen, wie sie bei unterschiedlichen Regelungsarten für Motor- und Generatorbetrieb notwendig wären, können dadurch vermieden werden.

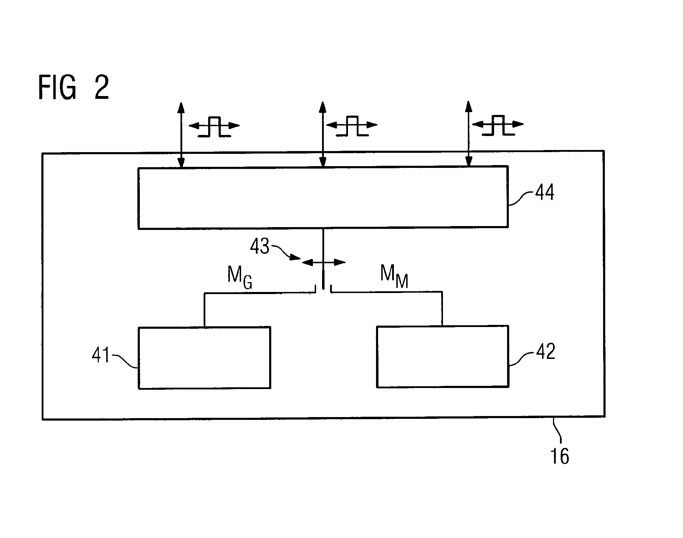

Vorteilhaft wird der Wellengenerator/-motor sowohl im Motorbetrieb als auch im Generatorbetrieb drehmomentgeregelt und somit proportional zu aufgenommenen oder abgegeben elektrischen Leistung, da sich die Drehzahl relativ langsam ändert. Das Steuer- und Regelsystem 16 weist dann gemäß FIG 2 zum einen eine Regelungskomponente 41 zur Erzeugung eines Drehmomenten-Sollwertes M_{G} im Generatorbetrieb und zum anderen eine Regelungskomponente 42 zur Erzeugung eines Drehmomenten-Sollwertes M_{M} für den Motorbetrieb auf, wobei durch eine Umschaltung 43 sichergestellt wird, dass nur einer der beiden Sollwerte auf eine nachfolgende Steuerungskomponente 44 für die Ansteuerung der Umrichter 12 und 15 im Generator- und im Motorbetrieb geschaltet ist. Die Regelungskomponenten 41, 42, die Umschaltung 43 und die Steuerungskomponente 44 sind vorzugsweise als Funktionsbausteine in einer Software realisiert.

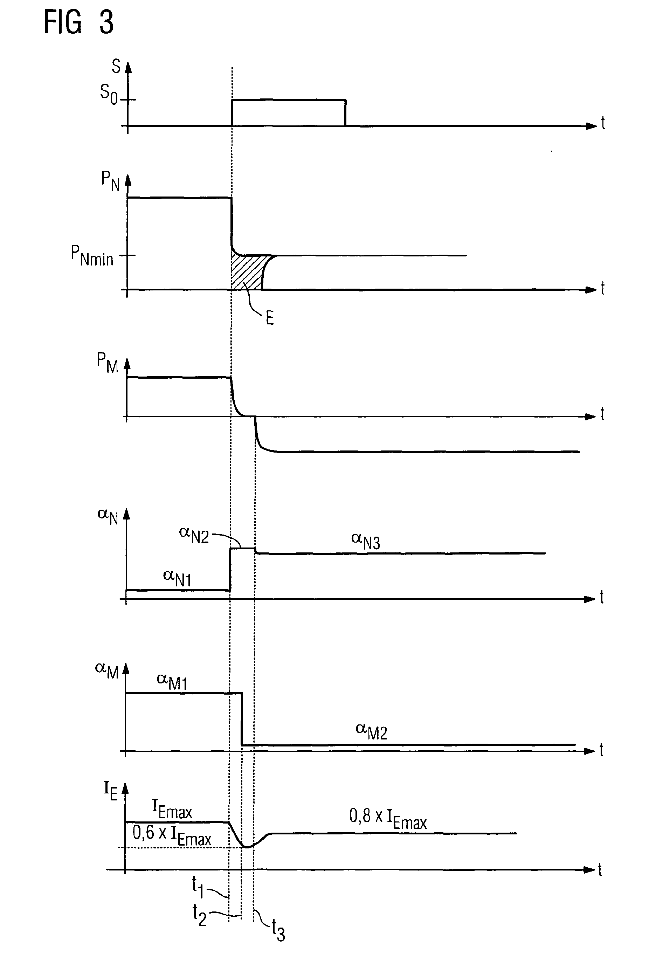

Unter Bezugnahme auf FIG 3 soll im Folgenden für den Fall, dass in den Stromrichtern 13, 14, 15 Thyristoren als Stromrichterventile verwendet werden, eine Umschaltung von Motorzu Generatorbetrieb erläutert werden. Die Einschaltdauern der Stromrichterventile der Stromrichter 13, 14 und 15 und damit die Umschaltung von Motor- auf Generatorbetrieb werden dabei über die jeweiligen Steuerwinkel gesteuert. Der Stromfluss durch die Thyristoren hängt von deren Zündzeitpunkten ab. Der Steuerwinkel gibt an, um wie viel Grad der Zündzeitpunkt gegenüber einer Zündung beim Nulldurchgang der Spannung verschoben ist. Durch Steuerung des Steuerwinkels kann der Stromfluss durch den Stromrichter und somit Strom und Spannung auf der Stromrichterausgangsseite gesteuert werden.

FIG 3 zeigt den zeitlichen Verlauf des Störungssignales S auf der Signalleitung 36, des Leistungsbedarfes PN des Schiffsnetzes 5, der netzseitigen Leistungsaufnahme/-abgabe PM des Umrichters 12, des Steuerwinkels α_{M} des motorseitigen Stromrichters 13, des Steuerwinkels α_{N} des netzseitigen Stromrichters 14 und des Erregerstromes I_{E}.

Im Zeitpunkt t1 signalisiert das Störsignal S durch einen Sprung auf den Wert So eine Störung des Abwärmerückgewinnungssystems 20. Hierdurch wird zum einen unter Umgehung des Power Management Systems 30 der Leistungsbedarf P_{N} des Schiffsnetzes 5 durch Abschaltung der unkritischen Verbraucher 7 gesenkt. Zum anderen schaltet das Steuer- und Regelsystem 16 den Wellengenerator/-motor 11 nun innerhalb von weniger als 1 Sekunde von Motorbetrieb in Generatorbetrieb um. Hierzu wird in einem ersten Schritt der netzseitig Stromrichter 14 derart angesteuert, dass der Stromfluss aus dem Netz 5 in den Stromrichter 14 schnellstmöglich unterbunden und somit auch der Bedarf an elektrischer Leistung aus dem Schiffnetz 5 weiter gesenkt wird.

Hierfür senkt die Regelungskomponente 42 für den Motorbetrieb den Momentensollwert MM augenblicklich auf Null, wodurch der Steuerwinkel α_{N} für die Ansteuerung der Ventile des Stromrichters 14 von seinem ursprünglichen Wert α₁ auf den Wert α₂ vergrößert wird.

Insgesamt wird durch diese Maßnahmen der Leistungsbedarf P_{N} des Schiffsnetzes auf den Wert P_{Nmin} gesenkt. Außerdem wird der Momentanwert der Netzfrequenz als Sollwert für den späteren Generatorbetrieb in dem Steuer- und Regelsystem 16 abgespeichert.

Falls der Wellengenerator/-motor 11 im Motorbetrieb im Feldschwächebereich betrieben wurde, wird in einem nächsten Schritt der Erregerstromrichter 15 derart angesteuert, dass über den Erregungsstrom IE die Motorspannung UM soweit reduziert wird, dass die Gefahr eines Wechselrichterkippens der Thyristoren des Umrichters 12 vermieden wird. Dies geschieht über eine Änderung des Steuerwinkels α_{IE} für die Thyristoren des Erregerstromrichters 15.

Die Zeit bis die Erregung des Wellengenerator/-motors 11 auf den für den Generatorbetrieb angestrebten Wert reduziert ist, kann dadurch verkleinert werden, dass der Erregerstromrichter 15 derart angesteuert wird, dass der Erregerstrom IE zuerst auf einen Wert abgesenkt wird, der kleiner ist als der tatsächlich für den Generatorbetrieb angestrebte Wert, und anschließend auf den angestrebten Wert angehoben wird. Es hat sich als besonders vorteilhaft herausgestellt, wenn wie im Fall des Ausführungsbeispieles der Erregerstrom zuerst auf 0.6*I_{Emax} abgesenkt und anschließend auf 0.8*I_{Emax} angehoben wird.

Falls der Wellengenerator/-motor 11 im Motorbetrieb nicht im Feldschwächebereich betrieben wurde, ist die Motorspannung UM bereits klein genug, um ein Wechselrichterkippen im Umrichter 12 zu vermeiden.

In einem nächsten Schritt wird im Zeitpunkt t2 durch das Steuer- und Regelsystem 16 der motorseitige Stromrichter 13 derart angesteuert, dass sich die Energieflussrichtung durch den Stromrichter 13 umkehrt, d.h. dass der Stromrichter 13 Energie von dem Wellengenerator/-motor 11 aufnimmt, in einen Gleichstrom umwandelt und dem Gleichstromzwischenkreis 37 zuführt. Dies geschieht durch Verkleinerung des Steuerwinkels α_{M} für die Ansteuerung der Ventile des Stromrichters 14 von seinem ursprünglichen Wert α_{M1} auf den Wert α_{M2}. Der Wellengenerator geht nun von motorischen in generatorischen Betrieb.

In einem nächsten Schritt wird im Zeitpunkt t3 durch das Steuer- und Regelsystem 16 der netzseitige Stromrichter 14 derart angesteuert, dass er die dem Gleichstromzwischenkreis 37 vom Stromrichter 13 zugeführte Energie in einen Strom mit der Frequenz des Schiffsnetzes 5 umwandelt und in das Netz 5 einspeist. Dies geschieht dadurch, dass der Steuerwinkel α_{N} für die Ansteuerung der Ventile des Stromrichters 14 vom Wert α_{N2} auf den Wert α_{N3} verkleinert wird.

Der Umrichter 12 wandelt nun den motorseitigen Strom mit von der Drehzahl der Hauptmaschine 2 abhängigen Frequenz und somit vom Schiffsnetz 5 unterschiedlicher Frequenz in einen Strom mit der Frequenz des Schiffsnetzes 5 um. Die Frequenz der Netzspannung wird dabei von dem Steuer- und Regelsystem 16 auf ihren Momentanwert im Schiffsnetz 5 vor Beginn der Umschaltung geregelt.

Die während der Zeit der Umschaltung auf Generatorbetrieb vom Schiffsnetz 5 benötigte Energie E wird von der Blindleistungsmaschine 18 eingespeist, so dass die Frequenz und die Spannung des Schiffsnetzes 5 jeweils vorgegebene Grenzwerte nicht unterschreiten, die so gewählt sind, dass eine Sicherheitsabschaltung der kritischen Verbraucher 7 sicher vermieden wird.

Statt eines Gleichstrom-Zwischenkreisumrichters 12 kann auch ein Gleichspannungs-Zwischenkreisumrichter verwendet werden. In diesem Fall wird der Blindleistungsbedarf des Schiffsnetzes 5 durch den Zwischenkreiskondensator des Gleichspannungs-Zwischenkreisumrichters gedeckt, so dass eine gesonderte Blindleistungsmaschine nicht notwendig ist.

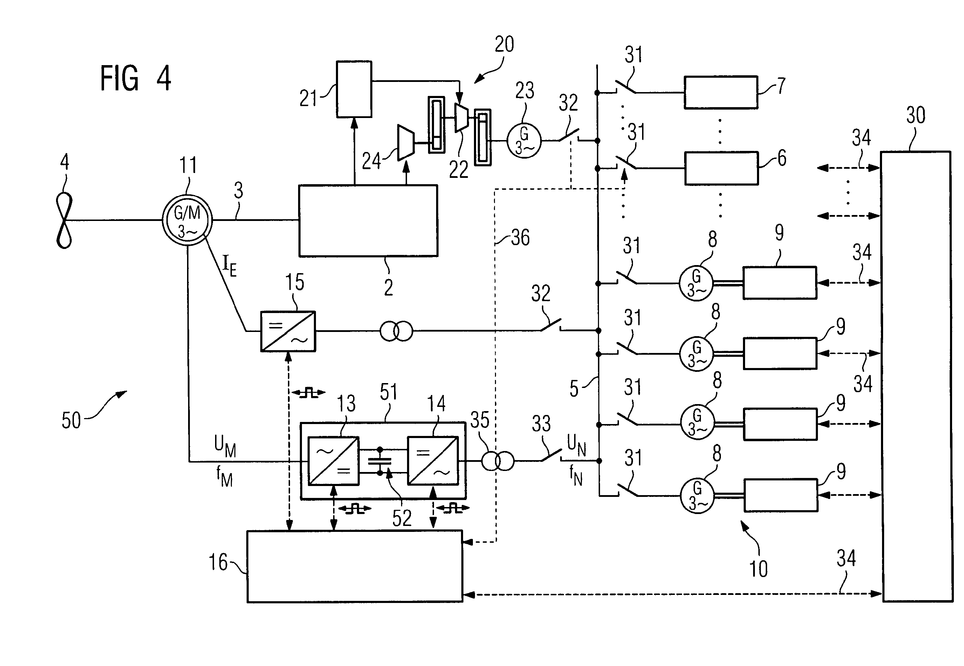

FIG 4 zeigt hierfür ein Schiffsantriebssystem 50, das dem Schiffsantriebssystem 1 aus FIG 1 entspricht, mit der Ausnahme dass der Gleichstrom-Zwischenkreisumrichter durch einen Gleichspannungs-Zwischenkreisumrichter 51 ersetzt wurde und die Blindleistungsmaschine entfallen ist.

Während der Umschaltung von Motor- zu Generatorbetrieb speist dann der Zwischenkreiskondensator 52 elektrische Energie in das Schiffsnetz ein, derart, dass die Spannung und die Frequenz des Schiffsnetzes 5 jeweils vorgegebene Grenzwerte nicht unterschreiten. Die Zeit für die Umschaltung von Motorbetrieb in Generatorbetrieb und die Dimensionierung des Zwischenkreiskondensators 52 hinsichtlich der in der Zeit der Umschaltung in das Schiffsnetz 5 einspeisbaren Energie sind hierzu aufeinander abgestimmt.

Im erläuterten Fall von Stromrichtern mit Thyristor-Stromrichterventilen und deren Steuerung über den Steuerwinkel α können Umschaltzeiten t3 - t1 von weniger als 1 Sekunde erzielt werden.

Werden sowohl hinsichtlich der Ein- als auch hinsichtlich der Ausschaltung steuerbare Stromrichterventile, z.B. IGBT-Stromrichterventile verwendet, kann deren Steuerung statt über den Steuerwinkel über ein Pulsmuster erfolgen (PWM-Modulation). In diesem Fall erfolgt die Sperrung des Stromflusses vom Netz in den netzseitigen Stromrichter, die Umkehr der Energierichtung im motorseitigen Stromrichter und die Energieeinspeisung in das Schiffsnetz mit der Netzspannung und Netzfrequenz durch den netzseitigen Stromrichter jeweils durch Änderungen der Pulsmuster der Stromrichter. Hierdurch sind sogar Umschaltzeiten im Bereich von 100ms möglich.

## Patentansprüche

1. Verfahren zum Betrieb eines Schiffsantriebssystems (1,50) umfassend
- eine Hauptmaschine (2), die eine Wellenanlage (3) antreibt, die mit einem Schiffspropeller (4) gekoppelt ist,
- einen über einen Umrichter (12) mit einem elektrischen Schiffsnetz (5) verbundenen Wellengenerator/-motor (11), der mit der Wellenanlage (3) gekoppelt ist und der im Motorbetrieb elektrische Energie aus dem Schiffsnetz (5) in mechanische Energie zum Antrieb der Wellenanlage (3) und im Generatorbetrieb mechanische Energie der Wellenanlage (3) in elektrische Energie für das Schiffsnetz (5) umwandelt,
**dadurch gekennzeichnet, dass** bei Motorbetrieb des Wellengenerators/-motors (11) und einem Ausfall einer Energieerzeugung für das Schiffsnetz (5) der Wellengenerator/-motor (11) von Motorbetrieb in Generatorbetrieb umgeschaltet wird, wobei während der Umschaltzeit eine Energiequelle (17,52) elektrische Energie in das Schiffsnetz (5) einspeist, derart, dass die Spannung und Frequenz des Schiffsnetzes (5) einen jeweils vorgegebenen Grenzwert nicht unterschreiten.

2. Verfahren nach Anspruch 1,
**dadurch gekennzeichnet, dass** als Umrichter ein Gleichstrom-Zwischenkreis-Umrichter (12) und als Energiequelle eine rotierende Blindleistungsmaschine (17) zur Erzeugung von Blindleistung für das Schiffsnetz (5) verwendet wird.

3. Verfahren nach Anspruch 1,
**dadurch gekennzeichnet, dass** als Umrichter ein Gleichspannungs-Zwischenkreis-Umrichter (51) und als Energiequelle ein Zwischenkreiskondensator (52) des Gleichspannungszwischenkreises verwendet wird.

4. Verfahren nach einem der vorhergehenden Ansprüche,
**dadurch gekennzeichnet, dass** der Umrichter (12,51) einen netzseitigen und einen motorseitigen Stromrichter (13,14) mit jeweils steuerbaren Stromrichterventilen aufweist und die Umschaltung des Wellengenerators/-motors (11) von Motorbetrieb in Generatorbetrieb durch Änderung der Einschaltdauer der Stromrichterventile erfolgt.

5. Verfahren nach einem der vorhergehenden Ansprüche,
**dadurch gekennzeichnet, dass** das Schiffsantriebssystem (1, 50) zur Energieerzeugung für das Schiffsnetz (5) ein Abwärmerückgewinnungssystem (20) umfasst, das aus Abwärme der Hauptmaschine (2) elektrische Energie erzeugt und in das elektrische Schiffsnetz (5) einspeist, und dass der Wellengenerator/-motor (11) bei einem Ausfall der Energieerzeugung durch das Abwärmerückgewinnungssystem (20) von Motorbetrieb in Generatorbetrieb umgeschaltet wird.

6. Verfahren nach Anspruch 5,
**dadurch gekennzeichnet, dass** die Umschaltung des Wellengenerators/-motors (11) von Motorbetrieb in Generatorbetrieb von dem Abwärmerückgewinnungssystem (20) unter Umgehung eines softwaregesteuerten Power Management Systems (30) ausgelöst wird.

7. Verfahren nach Anspruch 5 oder 6,
**dadurch gekennzeichnet, dass** bei einem Ausfall der Energieerzeugung durch das Abwärmerückgewinnungssystem (20) an das Schiffsnetz (5) angeschlossene, für den Schiffsbetrieb unkritische, elektrische Verbraucher (6) abgeschaltet werden.

8. Verfahren nach einem der vorhergehenden Ansprüche,
**dadurch gekennzeichnet, dass** der Wellengenerator/-motor (11) innerhalb von weniger als 1 Sekunde von Motorbetrieb nach Generatorbetrieb umgeschaltet wird.

9. Schiffsantriebssystem (1) umfassend
- eine Hauptmaschine (2) zum Antrieb einer Wellenanlage (3), die mit einem Schiffspropeller (4) gekoppelt ist,
- einen elektrisch über einen Umrichter (12) mit einem elektrischen Schiffsnetz (5) verbundenem Wellengenerator/-motor (11), der mit der Wellenanlage (3) gekoppelt ist und durch den im Motorbetrieb elektrische Energie aus dem Schiffsnetz (5) in mechanische Energie zum Antrieb der Wellenanlage (3) und im Generatorbetrieb mechanische Energie der Wellenanlage (3) in elektrische Energie für das Schiffsnetz (5) umwandelbar ist,
**gekennzeichnet durch**
- ein Steuer- und Regelsystem (16) zur Umschaltung des Wellengenerators/-motors (11) bei einem Ausfall einer Energieerzeugung für das Schiffsnetz (5) von Motorbetrieb zu Generatorbetrieb und
- eine Energiequelle (17,52), **durch** die während der Umschaltung von Motorbetrieb in Generatorbetrieb elektrische Energie (E) in das Schiffsnetz (5) einspeisbar ist, wobei die Zeit für die Umschaltung von Motorbetrieb in Generatorbetrieb und die Dimensionierung der Energiequelle (17,52) hinsichtlich der in der Zeit der Umschaltung in das Schiffsnetz (5) einspeisbaren Energie derart aufeinander abgestimmt sind, dass aufgrund der während der Umschaltung in das Schiffsnetz (5) eingespeisten Energie die Spannung und Frequenz des Schiffsnetzes (5) einen jeweils vorgegebenen Grenzwert nicht unterschreiten.

10. Schiffsantriebssystems nach Anspruch 9,
**dadurch gekennzeichnet, dass** der Umrichter als Gleichstrom-Zwischenkreis-Umrichter (12) ausgebildet ist die Energiequelle eine rotierende Blindleistungsmaschine (17) zur Erzeugung von Blindleistung für das Schiffsnetz (5) ist.

11. Schiffsantriebssystems nach Anspruch 9,
**dadurch gekennzeichnet, dass** der Umrichter als Gleichspannungs-Zwischenkreis-Umrichter (51) ausgebildet ist und die Energiequelle ein Zwischenkreiskondensator (52) des Gleichspannungs-Zwischenkreises ist.

12. Schiffsantriebssystems nach einem der Ansprüche 9 bis 11,
**dadurch gekennzeichnet, dass** der Umrichter (12,51) einen netzseitigen und einen motorseitigen Stromrichter (13,14) mit jeweils steuerbaren Stromrichterventilen aufweist und das Steuer- und Regelsystem (16) den Wellengenerator/-motor (11) durch Änderung der Einschaltdauer der Stromrichterventile von Motorbetrieb in Generatorbetrieb umschaltet.

13. Schiffsantriebssystem nach einem der Ansprüche 9 bis 12,
**dadurch gekennzeichnet, dass** es ein Abwärmerückgewinnungssystem (20) zur Erzeugung elektrischer Energie für das elektrische Schiffsnetz (5) aus Abwärme der Hauptmaschine (2) umfasst und dass das Steuer- und Regelsystem (16) zur Umschaltung des Wellengenerators/-motors (11) von Motorbetrieb zu Generatorbetrieb bei einem Ausfall der Energieerzeugung durch das Abwärmerückgewinnungssystem (20) dient.

14. Schiffsantriebssystems nach Anspruch 13, **dadurch gekennzeichnet, dass** die Umschaltung des Wellengenerators/-motors (11) von Motorbetrieb in Generatorbetrieb von dem Abwärmerückgewinnungssystem (20) unter Umgehung eines softwaregesteuerten Power Management Systems (30) des Schiffnetzes (5) auslösbar ist.

15. Schiffsantriebssystems nach einem der Ansprüche 13 bis 14, **gekennzeichnet durch** eine Abschaltung an das Schiffsnetz (5) angeschlossener, für den Schiffsbetrieb unkritischer elektrischer Verbraucher bei einem Ausfall der Energieerzeugung des Abwärmerückgewinnungssystems (20).

16. Schiffsantriebssystems nach einem der Ansprüche 9 bis 15,
**dadurch gekennzeichnet, dass** der Wellengenerator/-motor (12), der Umrichter (12,52) und das Steuer- und Regelsystem (16) derart ausgebildet sind, dass der Wellengenerator/-motor (11) innerhalb weniger als 1 Sekunde von Motorbetrieb nach Generatorbetrieb umschaltbar ist.
